# EUROPEAN PATENT APPLICATION

(11) **EP 4 546 643 A1**
(43) Date of publication of application: **30.04.2025**
(21) Application number: 23315397.2
(22) Date of filing: 24.10.2023
(51) Int. Cl.: H02S 20/00

(54) **DEVICE AND ASSOCIATED METHOD USING SOLAR ENERGY AND ADAPTED FOR THE PROTECTION OF CORALS**

(71) Applicant: TotalEnergies OneTech, 92078 Paris La Defense Cedex (FR); Centre National de la Recherche Scientifique, 75016 Paris (FR); Ecole Pratique des Hautes Etudes, 75014 Paris (FR); Université Perpignan Via Domitia, 66860 Perpignan Cedex 9 (FR)
(72) Inventor: Drahi, Etienne, 92078 PARIS LA DEFENSE CEDEX (FR); Planes, Serge, 75016 PARIS (FR); Adge, Mathieu, 92078 PARIS LA DEFENSE CEDEX (FR); Verspieren, Christina, 92078 PARIS LA DEFENSE CEDEX (FR)
(74) Representative: Innovincia

(57) **Abstract**

The invention relates to a photovoltaic system 1, which comprises flotation means 2, photovoltaic production means 3 carried by the flotation means. Such a system is advantageously used to protect a coral reef 8 from excess of solar radiation 6.

## Description

The present invention relates to the field of solar energy.

Coral reef are the cradle of life in the ocean and providing 30% of the biodiversity of the Ocean. Coral reefs are declining around the world to an unprecedent rhythm due to massive coral bleaching. Coral bleaching is due to climate change impact and especially because of the conjecture of two main effects: water temperature increase and exposition to intense light radiation (especially UV). These bleaching events are reported more and more often impacting strongly reef health and a large quantity of coral reef in the world is at risk of disappearing.

The problem to be solved, and a purpose of the invention, is how to use floating solar systems that will in addition protect coral against bleaching while at the same time allowing decarbonized energy production.

According to the invention, a solution is a photovoltaic system comprises flotation means, photovoltaic production means and a supporting structure designed to connect flotation means and production means. Production means may comprise several photovoltaic panels. The structure may comprise primary means, which may be primary beams, extending substantially horizontally in a first direction and secondary means, which may be secondary beams, extending in a second direction transverse to the first direction, the panels resting on said secondary means.

Advantageously, panels are distributed to occupy, seen in plan, a selected proportion of an extent in plan of the system.

The panels may be translucent. Translucent refers to a panel which allows all or part of an incident light, in particular received sunlight, to pass through it, so that it allows this light to illuminate what is under the shadow of this panel.

Advantageously, a nursery for spats of coral is disposed under the production means.

A further object of the invention relates to a shading system for coral reefs, which comprises a photovoltaic system according to the invention. The percentage of shading will be designed to accommodate best the growth of corals.

In addition, the shading system will also cut the UV over the entire system, reducing stress on corals behind.

A further object of the invention relates to a system, which comprises a a photovoltaic system according to the invention and support means for a coral spat. Said support means may comprise a rope. Said support means may comprise a grid.

Also, a method for protecting coral, which may be in different forms such as a pinnacle or a reef, from solar radiation, comprises a step for providing a system according to the invention and a second step for installing the provided system above said corals.

Embodiments and variants will be described below, as non-limiting examples, with reference to the -attached drawings in which:
[Fig. 1] is a schematic view, in elevation and perspective, of a photovoltaic production module according to the invention;
[Fig. 2] is a schematic view of a production system wherein the production means comprise several photovoltaic panels;
[Fig. 3] is a schematic view of a production system of the type described in figure 2, wherein several opaque photovoltaic panels are arranged in a dense layout; and,
[Fig. 4] is a schematic view, similar to Figure 3, of a system in which panels are arranged in a sparse layout.

Terms as "top", "bottom", "upper" and "lower", "horizontal" and "vertical" and the like may be arbitrarily used in this description and generally refer to positions shown in the figures.

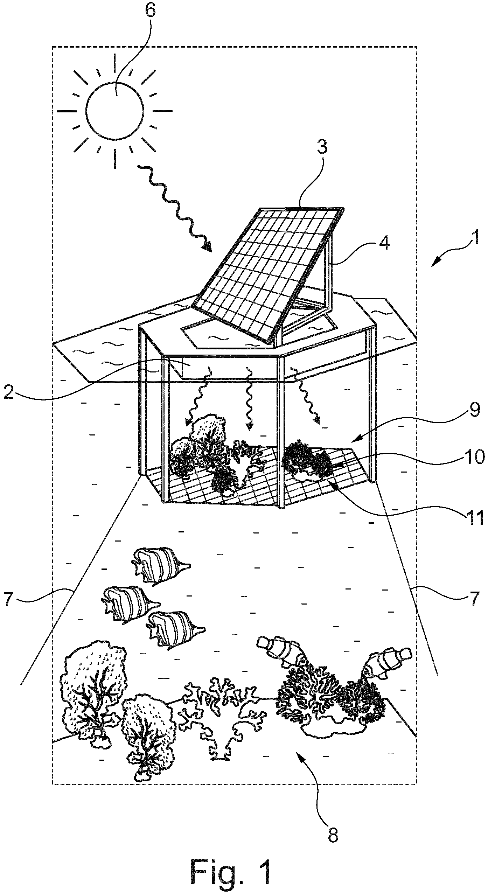

Figure 1 illustrates a floating photovoltaic system 1 according to the invention. This system comprises flotation means 2, photovoltaic production means and a supporting structure 4. In the example of figure 1, the flotation means are in the form of an annular float 2 and the production means are in the form of a photovoltaic panel 3; the support structure is designed to join the float 2 and the panel 3. Here the panel 3 is a monoplane panel; it is intended to be oriented substantially in the direction of the sun 6 at its zenith, i.e. in the direction of the south in the northern hemisphere, and in the direction of the north in the southern hemisphere.

The system 1 is immobilized by mooring and anchoring means 7, substantially above a coral pinnacle 8 to which it provides a shade which protects it from an excess of ultraviolet rays.

In the example of figure 1, the system 1 also includes a nursery 9. The nursery includes a support kept submerged and suspended under the float 2. This support is intended to hold coral spat 10, in the shade of the panel 3. In the example of figure 1, the support includes a grid 11 on which the spat 10 rest; the grid is retractable, which allows the spat to be sent to the bottom when considered sufficiently mature.

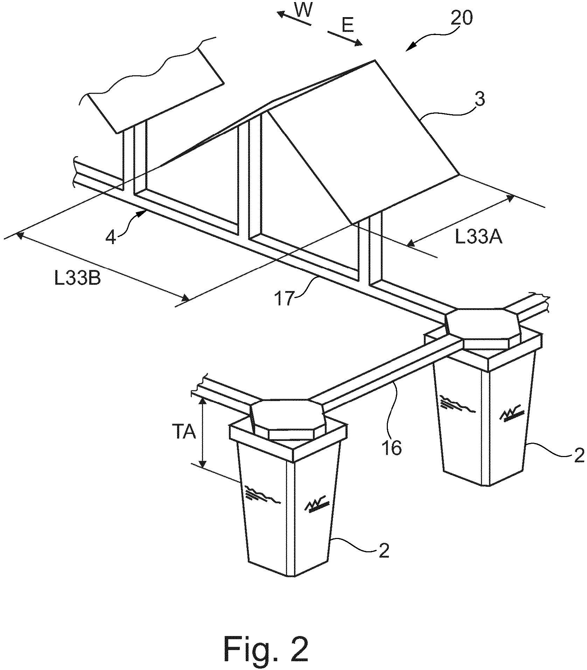

Figure 2 schematically illustrates an electrical generation system 1 comprising multiple photovoltaic panels. In this embodiment, the structure 4 comprises primary beams 16 extending in a first direction and secondary beams 17 extending in a direction transverse to that of the primary beams. Beams all are substantially at the same level.

Floats 2 are arranged at the junction of a primary beam with a secondary beam, at least at each corner of the structure 4. Photovoltaic panels 3 are fixed on the secondary beams. In this example, they are arranged in pairs 33 each pair forming a double slope, one of the panels being directed towards the east E and the other towards the west W; this arrangement is particularly advantageous near the equator where the sun of midday is always substantially in plumb with the system.

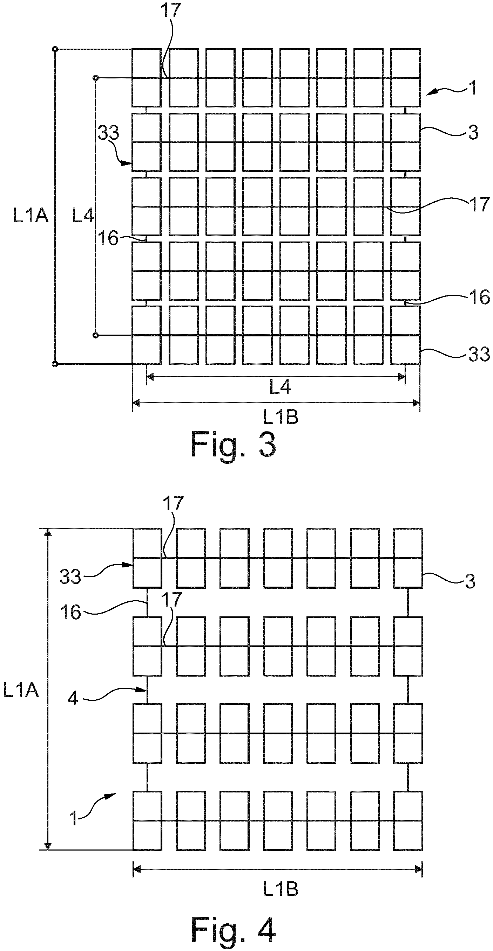

Typically, in the illustrated example, the outer beams form, in plan, a square with a side length L4 of nine meters, with four floats, each at a corner of the structure 4. As illustrated in the plan views of Figures 3 and 4, the module, equipped with its pairs 33 of panels 3, has an overall extent E, seen in plan, where E = L1A x L1B equal to eleven meters by ten meters. The air draft TA, measured under a beam, is about one meter and ten centimeters. Each pair, seen in plan, has a width L33A of one meter, by two meters length L33B.

In the examples of Figures 3 and 4, panels 3 are completely opaque, so the solar radiation occultation Q provided by the system 1 is a proportion P of a panel area, seen in plan, related to the extent E of the system.

In the example shown in Figure 3, forty pairs 33 of panels are used, which provide a shading Q of approximately seventy-three percent (73%) of the extent E.

In the example of Figure 4, the number of pairs 33 is twenty-eight pairs, so that the occultation Q is about fifty percent (50%), which corresponds to a proportion P of the extent E, occupied by twenty-eight pairs of panels, seen in plan.

It is also possible to use translucent panels that allow only part of the solar radiation to pass, or part of certain wavelengths of this radiation. At least some ultraviolet wavelengths are blocked by the system, mainly the B ultraviolet (UVB) and we will test the effect on corals.

Thus, for a substantially total coverage of the area E, for a transparency of twenty percent (20%), i.e. for a panel allowing twenty percent of the radiation that strikes it to pass:
- if the panels are contiguous, over the entire extent E, the occultation Q will be equal to eighty percent (80%); and,
- if the panels cover only fifty percent (50%) of the area E, as is the case in Figure 4, the occultation will be forty percent (40%) or eighty percent of the fifty percent covered.

Of course, the invention is not limited to the examples that have been above described. On the contrary, the invention is defined by the following claims.

It will indeed appear to the person skilled in the art that various modifications can be made to the above-described embodiments, in the light of the teaching which has just been disclosed.

Thus, a pair of panels, forming a dihedral, can be replaced by a single panel, horizontally arranged, of similar dimensions. Furthermore, the panels may be installed with a north, south or upward orientation.

The retractable grid of the nursery can be replaced by a biodegradable net designed to be dropped by the bottom with the spat attached to it. Also, the support of the spat may include ropes to which spats are attached. Other support may be used.

## Claims

1. Photovoltaic system (1), **characterized in that** it comprises flotation means (2), photovoltaic production means (3) and a supporting structure (4) designed to connect said flotation means and said production means.

2. System according to claim 1, wherein the production means (3) comprise several photovoltaic panels.

3. System according to claim 2, wherein the structure (4) comprises primary means (16) extending substantially horizontally in a first direction and secondary means (17) extending in a second direction transverse to the first direction, the panels (3) resting on said secondary means.

4. System according to one of claims 2 and 3, Wherein the panels are distributed to occupy, seen in plan, a selected proportion (P) of an extent (E) in plan of said system.

5. System according to one of claims 2 to 4, wherein the panels are translucent.

6. System according to one of claims 1 to 5, wherein a nursery (9) for spats (10) of coral is disposed under the production means.

7. A shading system for coral, including blocking some UV rays **characterized in that** it comprises a system according to any one of claims 1 to 6.

8. A coral nursery system, **characterized in that** it comprises a system according to any one of claims 1 to 5 and support means for a coral spat.

9. A nursery system according to claim 8, **characterized in that** the support means comprise a rope.

10. A nursery system according to claim 8 or 9, **characterized in that** the support means comprise a grid.

11. Method for protecting coral (8) from solar radiation, **characterized in that** it comprises providing a system (1) according to claim 7 and installing said system above said coral.
